# EUROPEAN PATENT APPLICATION

(11) **EP 3 944 038 A1**
(43) Date of publication of application: **26.01.2022**
(21) Application number: 20776520.7
(22) Date of filing: 17.02.2020
(51) Int. Cl.: G05B 19/418, G06Q 10/04, G06Q 50/04

(54) **PRODUCTION MANAGEMENT DEVICE, PRODUCTION MANAGEMENT METHOD, AND PRODUCTION MANAGEMENT PROGRAM**

(30) Priority: 22.03.2019 JP 2019055349
(71) Applicant: OMRON Corporation, Shiokoji-dori, Shimogyo-Ku Kyoto-shi Kyoto 600-8530 (JP)
(72) Inventor: ARAI, Wataru, Kyoto-shi, Kyoto 600-8530 (JP)
(74) Representative: Becker, Eberhard
(86) International application number: PCT/JP2020/005996
(87) International publication number: WO 2020/195317

(57) **Abstract**

This invention forecasts a more accurate productivity. A production management device (1) comprises: a producible quantity computing unit (101) that computes the producible quantity forecast in a unit period of time specified by a prescribed time slot and/or a prescribed day of the week based on production history information of a prescribed product; and a production-completed quantity computing unit (102) that computes the production-completed quantity forecast from a first point in time to a second point in time in the future, based on the producible quantity forecast.

## Description

### BACKGROUND

### Technical Field

The invention relates to a production management device, a production management method, and a production management program for managing the productivity of production equipment.

### Description of Related Art

A production management device is known as a conventional technology, which manages the production quantity, production time, etc. at a production site such as FA (Factory Automation). For example, Patent Document 1 below discloses a production management device that calculates and displays a delay time of the current production based on the target production quantity, target cycle time, current actual production quantity, and elapsed time. In the production management device, the delay time of the production can be sequentially displayed to perform management in achieving the production target.

### Related Art

### Patent Document

[Patent Document 1] Japanese Patent Publication "Japanese Laid-Open No. 4-183560 (published on June 30, 1992)"

### SUMMARY

### Problems to be Solved

The technology of Patent Document 1 above calculates the delay time by using the data of the actual production quantity on the day of production and the elapsed time based on the premise that there is no irregularity in productivity depending on the time zones and the productivity is the same in all time zones, for example.

However, for example, in the time zones that are immediately after the start of work, immediately before work, break time, change time of workers, etc., the production quantity tends to decrease due to inspection, travel time, takeover, etc. In addition, when the range of responsibility for each worker is wide, for example, a cell production method in which a small team of workers handles the product assembly process until completion, since the production capacity of each worker is different, the productivity is also different. Further, productivity also differs depending on the product to be produced. Since the conventional technology does not consider the irregularity in productivity caused by such conditions such as the time zone, worker, product, etc., there is a problem that the forecast may go awry greatly.

One aspect of the invention realizes a production management device that can forecast the productivity more accurately.

### Means for Solving the Problems

In view of the above, a production management device according to one aspect of the invention includes: a producible quantity computing unit that computes a producible quantity forecast in a unit period specified by at least one of a predetermined time zone and a predetermined day of a week based on production history information of a predetermined product; and a production-completed quantity computing unit that computes a production-completed quantity forecast from a first time point to a second time point in a future based on the producible quantity forecast.

Further, in view of the above, a production management method according to one aspect of the disclosure includes: a producible quantity computing step of computing a producible quantity forecast in a unit period specified by at least one of a predetermined time zone and a predetermined day of a week based on production history information of a predetermined product; and a production-completed quantity computing step of computing a production-completed quantity forecast from a first time point to a second time point in a future based on the producible quantity forecast.

### Effects

According to one aspect of the invention, the productivity can be forecast more accurately in consideration of the conditions of the time zone and the day of the week.

### BRIEF DESCRIPTION OF THE DRAWINGS

FIG. 1 is a block diagram showing an example of a main configuration of a production management device according to the first embodiment of the invention.
FIG. 2 is a flowchart showing an example of processing executed by the production management device.
FIG. 3 is a diagram illustrating an example of production history information according to the first embodiment of the invention.
FIG. 4 is a diagram illustrating an example of a method for computing a producible quantity forecast according to the first embodiment of the invention.
FIG. 5 is a diagram illustrating an example of a method for computing a production-completed quantity forecast according to the first embodiment of the invention.
FIG. 6 is a diagram illustrating a setting of an output destination of forecast information according to the first embodiment of the invention.
FIG. 7 is a diagram illustrating an example of a plurality of notifications.
FIG. 8 is a diagram illustrating an example of computing by diverting other production history information.
FIG. 9 is a diagram illustrating another example of computing by diverting other production history information.
FIG. 10 is a diagram showing an example of information saved in a recording medium.
FIG. 11 is a diagram illustrating an example of computing a producible quantity forecast in a period specified by at least one of an elapsed time from a production start time and a predetermined day of the week.

### DESCRIPTION OF THE EMBODIMENTS

### [First embodiment]

Hereinafter, an embodiment according to one aspect of the invention (hereinafter, also referred to as "the present embodiment") will be described with reference to the drawings. In the following, the description will proceed based on an example in which the invention is applied to a production line. However, it should be understood that the configuration of the invention described in the claims can be applied to various industrial fields including production equipment without a production line in addition to the production line.

### <Application example>

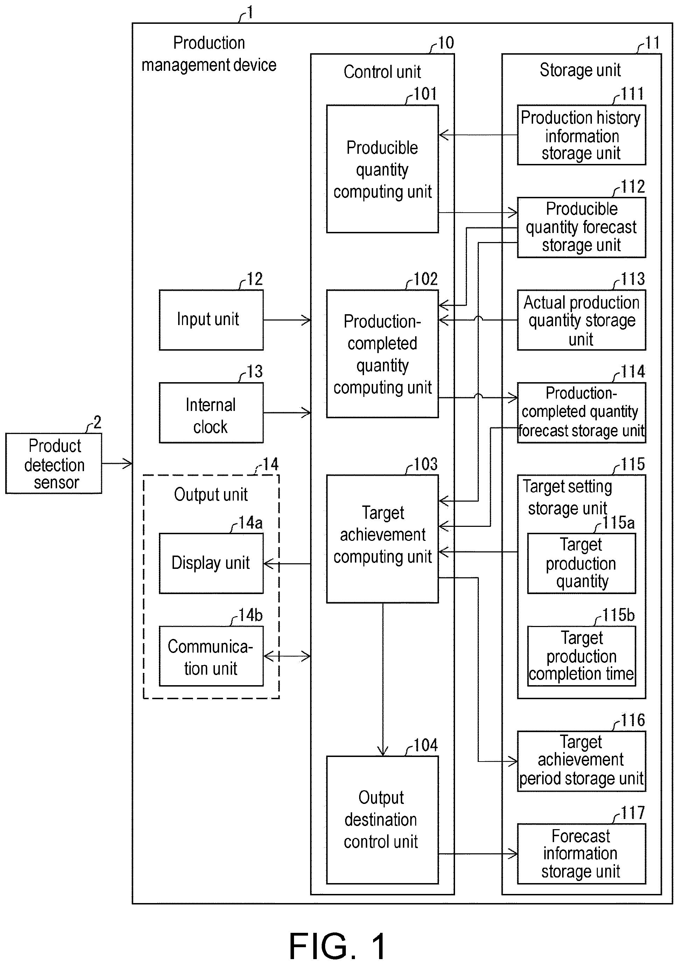

First, an example of the configuration to which the invention is applied will be described with reference to FIG. 1. FIG. 1 is a block diagram showing an example of a main configuration of a production management device 1 according to the present embodiment.

At a production site such as FA (Factory Automation), control of factory devices with use of PLC (Programmable Logic Controller) is widely performed. The PLC controls a control target device, collects data detected by a detection device, and transmits the same to a database.

In such an existing PLC environment, the embodiment according to the invention can be applied by using the existing PLC and FA devices without making a new capital investment. Specifically, for example, the PLC collects data such as the product, production quantity, production time, worker, etc. from the control target device and transmits the same to a database or the like. The production management device 1 may be configured to forecast the progress by using the collected data.

The production management device 1 according to the present embodiment executes a producible quantity computing step of computing a producible quantity forecast in a unit period specified by at least one of a predetermined time zone and a predetermined day of the week based on production history information of a predetermined product; and a production-completed quantity computing step of computing a production-completed quantity forecast from a first time point to a second time point in the future based on the producible quantity forecast.

As a result, it is possible to forecast more accurately based on the past history information and considering the conditions of the time zone and the day of the week.

Hereinafter, a configuration example of the production management device 1 will be described.

### <Configuration example>

When the configuration example of the production management device 1 is outlined, as shown in FIG. 1, the production management device 1 includes a control unit 10 and a storage unit 11. A production history information storage unit 111 of the storage unit 11 saves the production history information of a predetermined product. A producible quantity computing unit 101 of the control unit 10 extracts the production history information and computes a producible quantity forecast in a unit time specified by at least one of a predetermined time zone and a predetermined day of the week. A production-completed quantity computing unit 102 of the control unit 10 computes a production-completed quantity forecast by a sum of an actual production quantity from a production start time to a current time and the producible quantity forecast from the current time to a target production completion time. Hereinafter, the configuration example of the production management device 1 will be specifically described.

The production management device 1 includes the control unit 10 that supervises and controls each unit of the production management device 1, the storage unit 11 that stores various data used by the production management device 1, an input unit 12 that receives an input operation, an internal clock 13 that indicates the current time, and an output unit 14 for outputting information. The storage unit 11 may be a storage unit inside the production management device 1, or may be a server or storage outside the production management device 1.

The control unit 10 includes the producible quantity computing unit 101, the production-completed quantity computing unit 102, a target achievement computing unit 103, and an output destination control unit 104. Further, the storage unit 11 saves the production history information storage unit 111, a producible quantity forecast storage unit 112, an actual production quantity storage unit 113, a production-completed quantity forecast storage unit 114, a target setting storage unit 115, a target achievement period storage unit 116, and a forecast information storage unit 117. A target production quantity 115a and a target production completion time 115b are stored in the target setting storage unit 115.

First, the producible quantity computing unit 101 extracts the production history information from the production history information storage unit 111 and computes the producible quantity forecast. The production history information storage unit 111 is a storage unit for saving the production history information in advance.

The production history information refers to data indicating the actual production quantity in a period (hereinafter referred to as "unit period") specified by at least one of a predetermined time zone and a predetermined day of the week, such as "2019-04-01 09:00 to 09:59", for a predetermined product and a predetermined worker. The production history information includes data of the above unit period for a predetermined period in the past (for example, for the past 5 weeks).

In detail, the production history information includes data such as the product ID (Identification) (product information), worker ID (worker information), unit period, and actual production quantity. The product ID and the worker ID are data input to or received by the production management device 1 via the input unit 12 or a communication unit 14b in advance before the start of production work, and are saved as a part of the production history information. The data of the product ID and the worker ID may be any of data input by an operation of a keyboard or a touch panel, data acquired from a database of product IDs or worker IDs, and data transmitted to the production management device 1 after being read by a barcode or a wireless tag, or may be data combining these, for example. Further, the worker ID may be an ID that identifies an individual worker, or an ID that identifies a predetermined production group or the like.

The actual production quantity refers to data indicating the quantity of the predetermined products actually produced, and may be the quantity of finished products transmitted from a product detection sensor 2 installed near the production line through which the finished products flow, for example. Further, the actual production quantity may be data obtained by measuring the number of times the worker presses a button for each fixed number of productions, data read from a wireless tag, and data obtained by scanning a barcode, for example. The measured actual production quantity is saved in the actual production quantity storage unit 113 together with the time information.

The production history information is obtained by saving in advance the production history information for a predetermined period in the past so as to be used by the production management device 1 when forecasting productivity. The production management device 1 forecasts a progress status or the like by performing various calculations using the production history information, and sends a notification of the result.

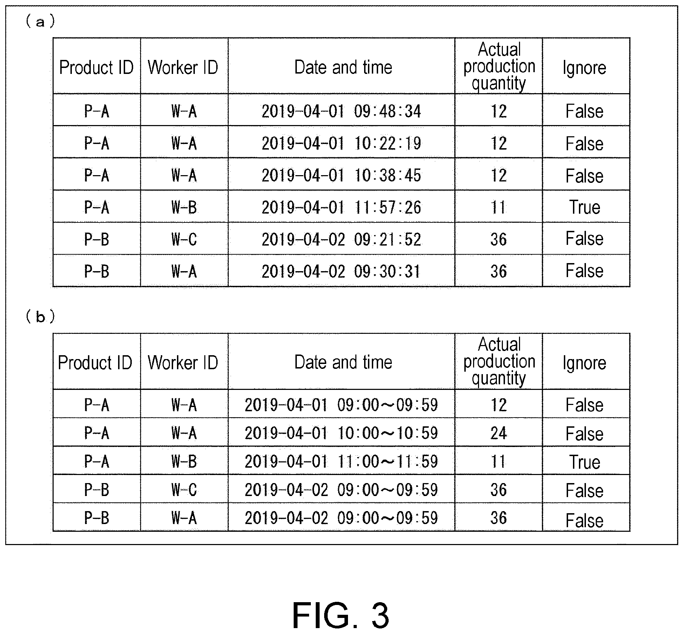

Since the production history information is data obtained by accumulating the past production history, it is possible to forecast in consideration of the time zone, the day of the week, etc., which is different from the conventional technology that forecasts based on data of the day of production. Therefore, it is possible to forecast more accurately as compared with the conventional technology that does not consider the time zone, the day of the week, etc. The details of the production history information will be described later based on FIG. 3.

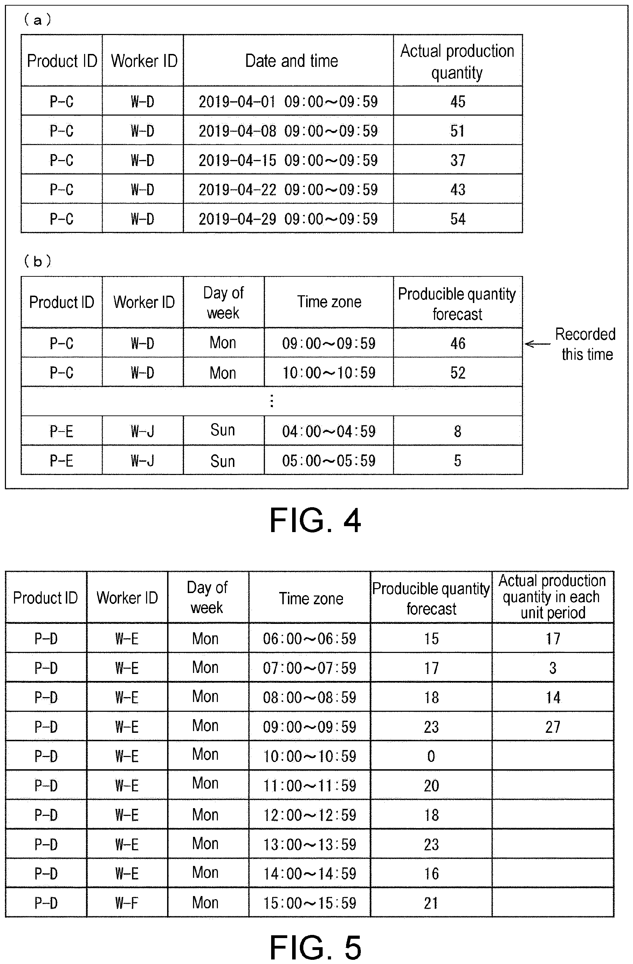

The producible quantity computing unit 101 computes the producible quantity forecast based on the production history information extracted from the production history information storage unit 111. The producible quantity forecast refers to data indicating the quantity of products that is forecast to be producible in a unit period for a predetermined product and a predetermined worker. The producible quantity computing unit 101 saves the computed producible quantity forecast in the producible quantity forecast storage unit 112. The producible quantity forecast storage unit 112 is a storage unit for saving the computed producible quantity forecast. The details of the computation of the producible quantity forecast performed by the producible quantity computing unit 101 will be described later based on FIG. 4.

The production-completed quantity computing unit 102 acquires the actual production quantity from the past (first time point) to the present from the actual production quantity storage unit 113. Further, the producible quantity forecast from the present to the target production completion time 115b (second time point) is acquired from the producible quantity forecast storage unit 112. The production-completed quantity computing unit 102 computes the production-completed quantity forecast by the sum of the acquired actual production quantity and the producible quantity forecast. The production-completed quantity forecast refers to, for example, the sum of the quantity of products actually produced from the start of work to the present and the forecast producible quantity from the present to the target production completion time 115b, and is a quantity obtained by forecasting the production-completed quantity from the start of work to the target production completion time 115b. The production-completed quantity computing unit 102 saves the computed production-completed quantity forecast in the production-completed quantity forecast storage unit 114. The production-completed quantity forecast storage unit 114 is a storage unit for saving the computed production-completed quantity forecast. The details of the computation of the production-completed quantity forecast performed by the production-completed quantity computing unit 102 will be described later based on FIG. 5.

The target setting storage unit 115 saves the target production quantity 115a and the target production completion time 115b that are preset. The target production quantity 115a and the target production completion time 115b may be input or transmitted in advance by a worker, a line manager or the like, or predetermined values may be recorded in a database or the like.

The target achievement computing unit 103 computes a target achievement period based on the actual production quantity acquired from the actual production quantity storage unit 113, the preset target production quantity 115a and target production completion time 115b acquired from the target setting storage unit 115, the producible quantity forecast acquired from the producible quantity forecast storage unit 112, and the production-completed quantity forecast acquired from the production-completed quantity forecast storage unit 114. The target achievement period refers to the date and time when the production of the target production quantity 114a is forecast to be completed. The target achievement computing unit 103 saves the computed target achievement period in the target achievement period storage unit 116. The target achievement period storage unit 116 is a recording unit for saving data indicating the target achievement period. The details of the computation of the target achievement period will be described later based on FIG. 5.

Furthermore, the target achievement computing unit 103 computes a forecast delay time or a forecast advance time based on the target production completion time 115b and the target achievement period. In addition, a production shortage quantity forecast or a production excess quantity forecast is computed based on the target production quantity 115a and the production-completed quantity forecast.

The target achievement computing unit 103 sends forecast information composed of the target achievement period, the production-completed quantity forecast, the forecast delay time or the forecast advance time, and the production shortage quantity forecast or the production excess quantity forecast to the output destination control unit 104, for example.

The output destination control unit 104 receives the forecast information from the target achievement computing unit 103. The output destination control unit 104 selects the output destination of the forecast information according to the degree of delay or advance time. The output destination control unit 104 saves the forecast information for which the output destination is selected in the forecast information storage unit 117, and transmits or displays the forecast information via the output unit 14. The output unit 14 includes a communication unit 14b that communicates in a wired or wireless manner, and a display unit 14a such as an HMI (Human Machine Interface), a liquid crystal screen, etc. Nevertheless, the device serving as the output unit 14 is not limited to the display unit 14a and the communication unit 14b, and other devices may also be adopted.

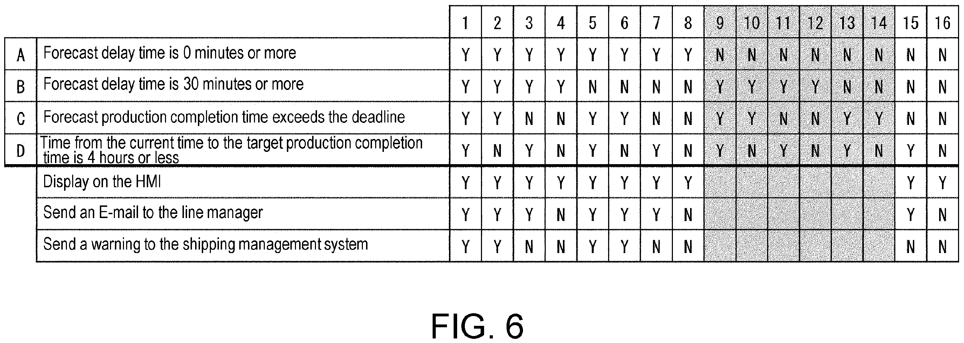

To specifically describe the selection of the output destination, for example, when the delay time is 30 minutes or less, the delay information is displayed on the HMI, the liquid crystal screen, etc. When the progress status is significantly delayed, in addition to displaying on the HMI, etc., an E-mail is transmitted to the production line manager to notify the production line manager of the forecast information, or a warning is transmitted to a shipping management system. By taking such measures, appropriate information can be conveyed to the right person as soon as possible to take prompt measures against the delay situation. The details of the operation of the output destination control unit 104 will be described later based on FIG. 6.

### <Flow of processing>

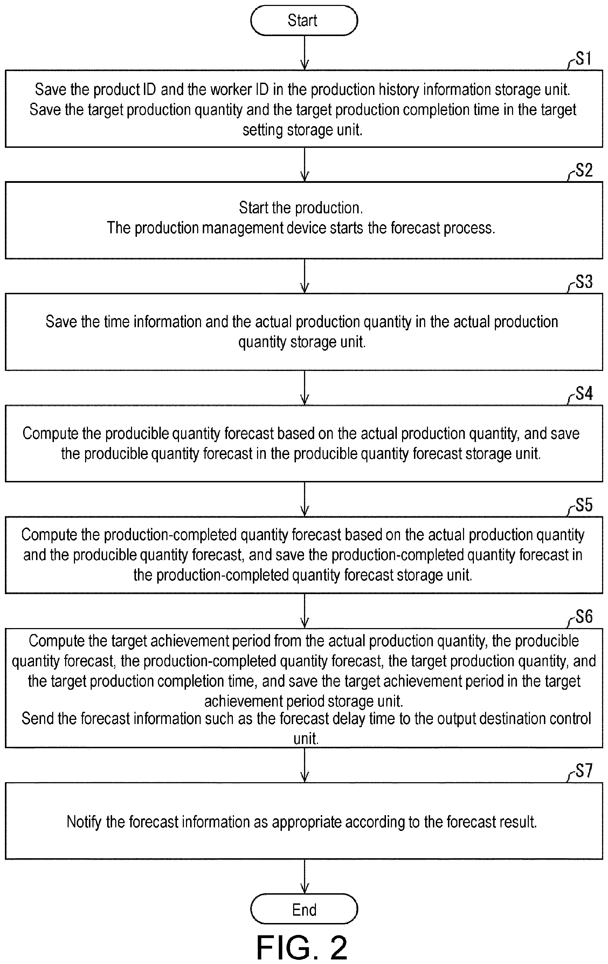

Next, the flow of processing (information processing method) executed by the production management device 1 will be described with reference to FIG. 2. FIG. 2 is a flowchart showing an example of processing executed by the production management device 1.

In S1, the control unit 10 saves the product ID and the worker ID in the production history information storage unit 111, and saves the target production quantity 115a and the target production completion quantity 115b in the target setting storage unit 115. The control unit 10 repeats the process of S1 every time at least one of the change of the worker and the start of production is performed.

In S2, the production is started, and the production management device 1 starts a forecast process.

In S3, the control unit 10 saves the time information and the actual production quantity in the actual production quantity storage unit 113. The control unit 10 repeats the process of S3 for every predetermined production quantity, for example.

In S4, the producible quantity computing unit 101 computes the producible quantity forecast based on the actual production quantity and saves the producible quantity forecast in the producible quantity forecast storage unit 112. The producible quantity computing unit 101 repeats the process of S4 at every predetermined timing.

In S5, the production-completed quantity computing unit 102 computes the production-completed quantity forecast based on the actual production quantity and the producible quantity forecast, and saves the production-completed quantity forecast in the production-completed quantity forecast storage unit 114.

In S6, the target achievement computing unit 103 computes the target achievement period from the actual production quantity, the producible quantity forecast, the production-completed quantity forecast, the target production quantity 115a, and the target production completion time 115b, and saves the target achievement period in the target achievement period storage unit 116. Further, the forecast information such as the forecast delay time is sent to the output destination control unit 104.

In S7, the output destination control unit 104 selects an output method according to the forecast result, and notifies the forecast information. The target achievement computing unit 103 and the output destination control unit 104 repeat the processes of S6 and S7 at every predetermined interval or when the production management device 1 is operated by the worker, the line manager or the like to forecast.

Since the production management device 1 can forecast the progress status more accurately and convey appropriate forecast information to the right person, it is possible to take prompt measures against the situation of delay or advance.

### <Production history information>

The production history information will be described in detail with reference to FIG. 3. FIG. 3 is a diagram illustrating an example of the production history information. (a) of FIG. 3 is an example in which the production history information is saved as one record for each predetermined actual production quantity, and (b) of FIG. 3 is an example in which the production history information is saved as one record for each predetermined date and time.

An example in which the production history information is saved as one record for each predetermined actual production quantity will be described based on (a) of FIG. 3. In (a) of FIG. 3, the items are "product ID", "worker ID", "date and time", "actual production quantity", and "ignore" in order from the left end.

In the "product ID", the product ID is input after classifying the records for each product ID of the product to be produced. In the "worker ID", the worker ID is input after further classifying the records classified for each product for each worker. In the "actual production quantity", the quantity actually produced is input.

In this way, when the worker ID is included in the production history information, the producible quantity computing unit 101 can compute the producible quantity forecast corresponding to the predetermined worker, and the production-completed quantity computing unit 102 can compute the production-completed quantity forecast corresponding to the predetermined worker.

In addition, when the product ID is included in the production history information, the producible quantity computing unit 101 can compute the producible quantity forecast corresponding to the predetermined product, and the production-completed quantity computing unit 102 can compute the production-completed quantity forecast corresponding to the predetermined product.

The "actual production quantity" is a registration unit of the record, and the registration unit is determined for each product. In the example of (a) of FIG. 3, the registration unit of the product P-A is 12, and the registration unit of the product P-B is 36. For the product P-A, a record is saved for every 12 pieces produced, and for the product P-B, a record is saved for every 36 pieces produced.

In the "date and time", the time when the registration unit quantity can be produced is input for each registration unit of the actual production quantity. As described above, for example, the top data shows that "12 products P-A were produced by the worker W-A at 09:48:34 on April 1, 2019".

In the "ignore", when there is inappropriate data as historical data, True is input so as not to use the data. On the other hand, False is input to appropriate data as historical data. In the fourth data, the actual production quantity is 11, which is less than the determined registration unit of 12, so True is input to the item "ignore". The data is judged to be inappropriate as historical data and is not used as historical data. In this way, for example, when computing the producible quantity forecast, the setting may be made to ignore or correct inappropriate data. In addition, when there is an exceptional period, for example, the production is suspended for some reason, the setting may be made to ignore or correct the data during that period.

As a result, inappropriate data can be excluded from the production history information, so it is possible to forecast more accurately. In addition, when the actual production quantity is used as the registration unit of the record, the number of records is large and the data amount increases. However, when data is ignored/corrected, there is little information saved in one record, so it has the advantage that the problem of ignoring/correcting a large amount of appropriate information is unlikely to occur.

Next, an example in which the production history information is saved as one record for each predetermined date and time will be described based on (b) of FIG. 3. For convenience of explanation, the description will not be repeated for those having the same functions as those described in (a) of FIG. 3.

The "date and time" is a registration unit of the record, and a new record is saved for each period input in the date and time. For example, when the unit period of the production history information is one hour, the registration unit may be set to one hour as the unit period, and a new record may be saved every hour.

When the date and time is used as the registration unit of the record, the number of records is small and the data amount can be decreased. However, when data is ignored/corrected, since a lot of information is saved in one record, a large amount of appropriate information is ignored/corrected together. Further, when the date and time of the production history information is used as the registration unit, if the unit period to be registered is changed, the past production history information before the change cannot be used, so it is difficult to change the unit period.

### <Producible quantity forecast>

Next, an example of a method for computing the producible quantity forecast will be described in detail with reference to FIG. 4. FIG. 4 is a diagram illustrating a method for computing the producible quantity forecast. (a) of FIG. 4 is a diagram showing the extracted production history information, and (b) of FIG. 4 is a diagram showing the computed producible quantity forecast.

In the example of (a) of FIG. 4, the production history information of "product P-C, worker W-D, unit period: Monday 9:00 to 9:59" for the past 5 weeks extracted from the production history information storage unit 111 by the producible quantity computing unit 101 is shown. At this time, as described above, the record recorded to be ignored (ignore is True) is not extracted.

The producible quantity computing unit 101 computes the average value of the actual production quantities shown in the extracted production history information. In the example of (a) of FIG. 4, the average value of the actual production quantities 45, 51, 37, 43, and 54 is 46. The producible quantity computing unit 101 saves the computed average value of the actual producible quantities as the producible quantity forecast of "product P-C, worker W-D, unit period: Monday 9:00 to 9:59".

Here, an example in which a simple average value is used as the producible quantity forecast is shown, but for example, a weighted average value, a median value, or a mode value may be used as the producible quantity forecast.

(b) of FIG. 4 shows the producible quantity forecast computed by the producible quantity computing unit 101. The first data from the top is the data recorded this time. In the item "product ID", P-C is input, in the "worker ID", W-D is input, in the "day of the week", Mon indicating Monday is input, in the "time zone", 9:00 to 9:59 is input, and in the "producible quantity forecast", the average value "46" computed this time is input.

In the example of FIG. 4, the producible quantity forecast is computed for a predetermined product and a predetermined worker, but the invention is not limited to this example. For example, the producible quantity forecast may be computed for all the products, for some product IDs, for all the workers or for some workers, or may be computed by a combination thereof.

### <Production-completed quantity forecast>

Next, an example of a method for computing the production-completed quantity forecast will be described in detail with reference to FIG. 5. FIG. 5 is a diagram illustrating a method for computing the production-completed quantity forecast.

In FIG. 5, the items are "product ID", "worker ID", "day of the week" and "time zone" which are unit periods, "producible quantity forecast", and "actual production quantity in each unit period".

In the "product ID", P-D is input. In the "worker ID", W-E and W-F are input, and it is shown that the worker changed from W-E to W-F at 15:00. In the "day of the week", Mon indicating Monday is input, and in the "time zone", a time zone for every hour is input.

In the "producible quantity forecast", except for the data at the bottom, the producible quantity forecast when the worker W-E produces the product P-D for each time zone on Monday is input. In the data at the bottom, the producible quantity forecast when the worker W-F who has replaced the worker W-E produces the product P-D from 15:00 to 15:59 on Monday is input.

In the "actual production quantity in each unit period", the actual production quantity in each unit time transmitted from the product detection sensor 2 is described. The fifth and subsequent data are blank because the current time is 10:00 and they have not been produced yet.

Here, for example, the current time is 10:00, the target production quantity 115a is 144 pieces, and the target production completion time is 15:00.

Since the actual production quantities from the production start time of 6:00 to the current time of 10:00 are 17, 3, 14, and 27, the total of these actual production quantities is 61. In other words, the quantity actually produced from the production start time to the current time is 61 pieces.

If the 61 pieces is subtracted from 144 pieces, which is the target production quantity 115a, 83 pieces is obtained. In other words, in order to achieve the target production quantity 115a, it is required to produce another 83 pieces.

The forecast quantity that can be produced from the current time of 10:00 to the target production completion time of 15:00 is the sum of the producible quantity forecast of the corresponding time, and the total of the corresponding numerical values 20, 18, 23, and 16 is 77. In other words, the forecast quantity that can be produced from the current time to the target production completion time is 77 pieces.

The total of the actual production quantity of 61 pieces actually produced from the production start time to the current time and the producible quantity forecast of 77 pieces that are forecast to be producible from the current time to the target production completion time is 138 pieces. The 138 pieces is the production-completed quantity forecast. The production-completed quantity forecast refers to the quantity of products that are forecast to be produced from the start of production to the target production completion time at the present time point.

### <Target achievement period>

If the production-completed quantity forecast of 138 pieces is subtracted from 144 pieces, which is the target production quantity 115a, 6 pieces is obtained, and it is known that it is 6 pieces short of the target production quantity 115a.

The time required to produce the 6 pieces corresponds to the time delayed from the target production completion time. The time required to produce 6 pieces can be computed based on the producible quantity forecast of the worker W-F in the time zone of 15:00 to 15:59 after the target production completion time. In other words, since it is forecast that the worker W-F can produce 21 products P-D in the 60 minutes from 15:00 to 15:59, (6/21) × 60 = 17. As a result, the time required to produce the shortage of 6 pieces is 17 minutes, and the forecast delay time is 17 minutes. Therefore, the target achievement period is computed as 15:17.

### <Output destination control>

Next, the selection of the output destination of the forecast information performed by the output destination control unit 104 will be described with reference to FIG. 6. FIG. 6 is a diagram illustrating an example of selecting the output destination for the forecast information.

In FIG. 6, 16 pieces of forecast information represented by numbers from 1 to 16 are shown in the first line. Further, at the left end, judgment conditions for selecting the output destination indicated by A to D and the output destination are shown. "Y" indicates that each judgment condition or output destination applies, and "N" indicates that it does not apply.

The judgment condition "A" indicates that the forecast delay time is 0 minutes or more, "B" indicates that the forecast delay time is 30 minutes or more, and "C" indicates that the forecast production completion time exceeds the deadline. The deadline refers to, for example, the deadline for delivery of the finished products to the shipping place, the inspection start time of the production equipment, etc., and may be saved in advance in the storage unit 11. Further, the deadline may be input or transmitted by the worker, the line manager or the like, or a predetermined value may be recorded in the database or the like. "D" indicates that the time from the current time to the target production completion time is 4 hours or less.

The output destination indicates the output destination to which the forecast information is output according to the degree of the delay time. For example, when the degree of delay is small, the HMI is set as the output destination, and the delay information is transmitted and displayed on the screen. When the degree of delay is medium, the manager of the production line is set as the output destination, and the delay information is sent by E-mail so that the manager can immediately deal with the delay situation. Further, when a large delay occurs, a warning of the progress status is sent to the shipping management system including an external server so that the person in charge of shipping can take prompt measures such as adjusting the shipping time.

For example, the forecast information 2 corresponds to the judgment elements A, B, and C, and uses the HMI, the production line manager, and the shipping management system as the output destinations. The forecast information 3 corresponds to the judgment elements A, B, and D, and uses the HMI and the production line manager as the output destinations.

Further, in the forecast information 9 to 12, since the condition A and the condition B contradict each other, the output destination is not selected. Further, in the forecast information 13 and 14, since the condition A and the condition C are inconsistent, the output destination is not selected.

In addition, an importance may be set in the forecast information. By setting the importance, when there is a large amount of forecast information, it is easy to take measures in consideration of the priority.

In this way, by selecting the output destination for the forecast information, it is possible to promptly convey appropriate information to the right person, and it is possible to take prompt measures against the delay situation.

### <Multiple notifications>

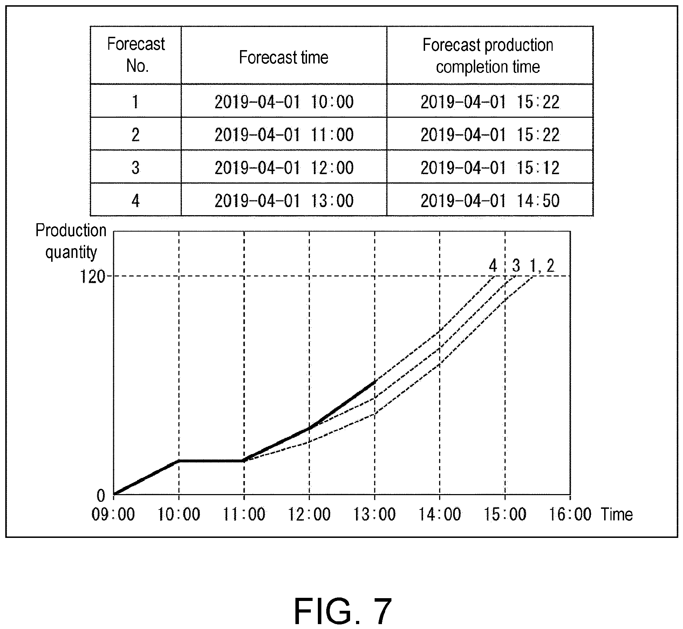

The examples provided so far show that the forecast information is sequentially notified one by one, but a plurality of pieces of forecast information may be notified at the same time. An example of a plurality of notifications will be described with reference to FIG. 7. FIG. 7 is a diagram illustrating an example of a plurality of notifications.

FIG. 7 is an example in which the forecast information at 10:00, 11:00, 12:00, and 13:00 is represented by a table and a graph. FIG. 7 shows a situation in which the forecast production completion time becomes earlier as it is later than the forecast information at the time point of 10:00. As a result, it can be easily confirmed that the measures taken for the delay situation are effective.

### <First modified example>

Each process described in the above embodiment can be changed as appropriate. For example, the producible quantity computing unit 101 extracts from the production history information the quantity of products forecast to be producible in a unit period for a predetermined product and a predetermined worker, and computes the producible quantity forecast. However, there are cases where the corresponding data is not included in the production history information and cannot be extracted. In such a case, other production history information that does not meet the extraction condition may be diverted for computation.

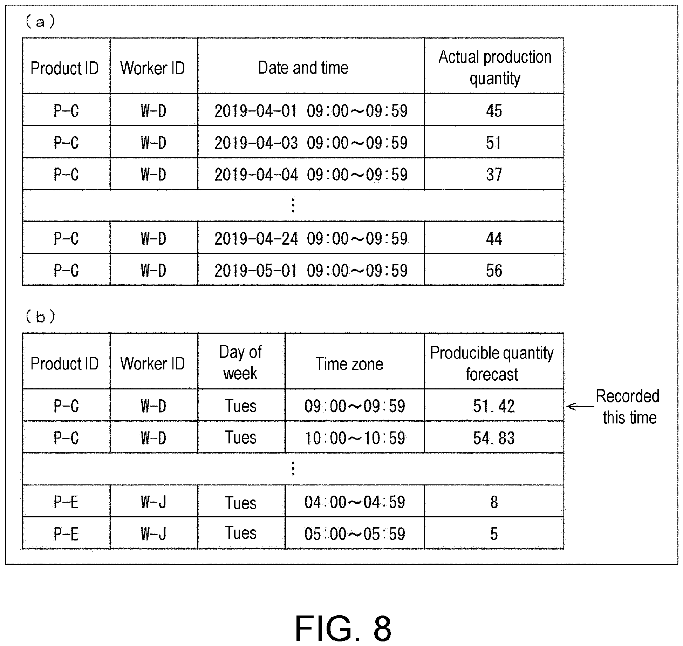

Hereinafter, an example of computing by diverting other production history information will be described with reference to FIG. 8. FIG. 8 is a diagram illustrating an example of computing by diverting other production history information. (a) of FIG. 8 is a diagram showing other production history information extracted, and (b) of FIG. 8 is a diagram showing the producible quantity forecast computed by diverting other production history information. For convenience of explanation, the description will not be repeated for those having the same functions as those described in FIG. 3.

(a) of FIG. 8 shows an example of extracting the production history information having a unit period of Tuesday 9:00 to 9:59. Since the worker W-D has never produced the product from 9:00 to 9:59 on Tuesday, there is no production history information for the unit period. In this case, the average value of the actual production quantities may be computed by extracting the production history information of, for example, Monday, Wednesday, Thursday, Friday, etc. other than Tuesday.

In (b) of FIG. 8, the computed average value 51.42 is input as the producible quantity forecast from 9:00 to 9:59 on Tuesday.

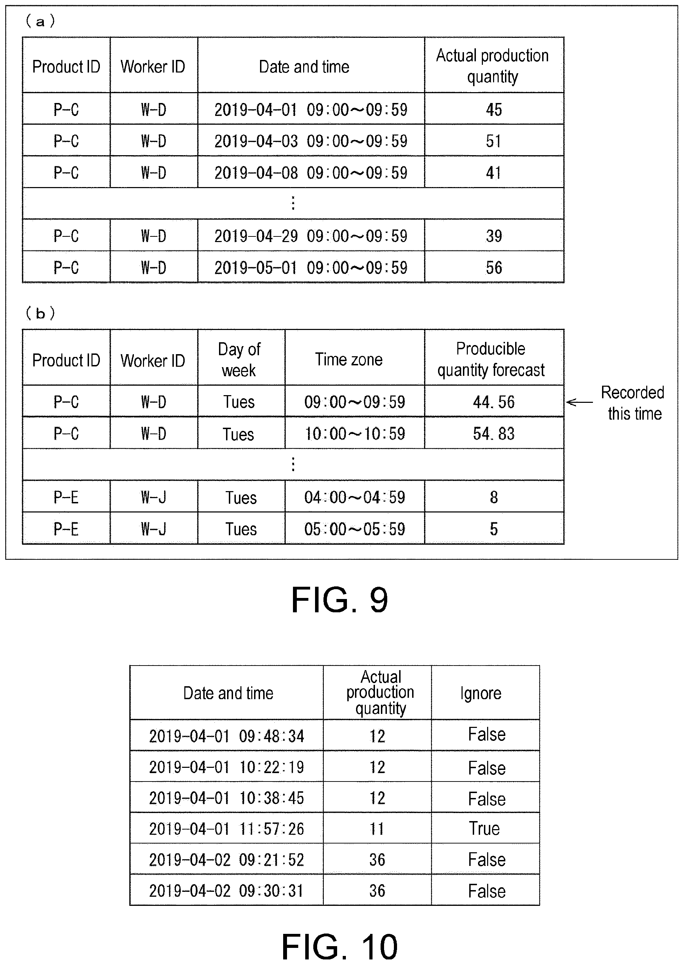

FIG. 9 is a diagram illustrating another example of computing by diverting other production history information. (a) of FIG. 9 is a diagram showing other production history information extracted, and (b) of FIG. 9 is a diagram showing the producible quantity forecast computed by diverting other production history information. For convenience of explanation, the description will not be repeated for those having the same functions as those described in FIG. 3.

The example of FIG. 8 shows that the producible quantity forecast is computed by diverting the production history information of, for example, Monday, Wednesday, Thursday, Friday, etc. other than Tuesday, but the invention is not limited to this example. As shown in (b) of FIG. 9, the computation may be performed by diverting the production history information of a specific day of the week other than Tuesday, for example, Monday and Wednesday which are the days before and after Tuesday. In addition, when the day without production history information is Wednesday, the production history information of Tuesday and Thursday which are the days before and after Wednesday may be diverted. Here, diverting the days before and after is based on the premise that the conditions such as work contents are similar. Therefore, for example, when the production shift is switched between "Monday, Wednesday, Friday" and "Tuesday, Thursday, Saturday", the production history information of Thursday may be diverted as the production history information of Tuesday. In addition, for example, when the production shift of a specific date in a month is different from that on another day, the production history information on another day of the specific date may be diverted as the production history information on a certain day of the specific date.

### <Second modified example>

Although the configuration in which the production history information includes the product ID and the worker ID has been described, the configuration may be set so that the production history information does not include the product ID and the worker ID, and the production history information is saved in a recording medium (for example, an information terminal, an IC card, an RF tag, etc.) for each product or worker. As a result, a server that centrally manages the production history information is not required.

FIG. 10 is a diagram showing an example of the information saved in the recording medium. Since only the production history information based on the combination of a specific product and a specific worker exists, the information of the product ID and the worker ID is not input.

### <Third modified example>

Although an example of computing the producible quantity forecast for a unit period has been described, the producible quantity forecast in a period specified by at least one of the elapsed time from the production start time and the predetermined day of the week may be computed.

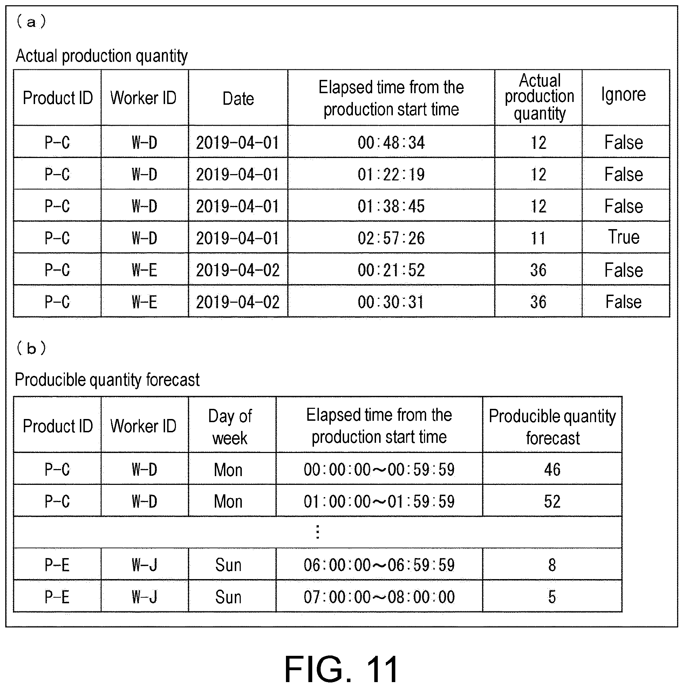

FIG. 11 is a diagram illustrating an example of computing the producible quantity forecast in the period specified by at least one of the elapsed time from the production start time and the predetermined day of the week. (a) of FIG. 11 is a diagram showing an example of the production history information in the period. (b) of FIG. 11 is a diagram showing an example of the computed producible quantity forecast in the period.

As a result, even if the production start time is changed, it is easy to forecast from the past data before the change.

### [Example of realization by software]

The control blocks of the production management device 1 (particularly, each block included in the control unit 10 of FIG. 1) may be realized by a logic circuit (hardware) formed in an integrated circuit (IC chip) or the like, or may be realized by software.

In the latter case, the production management device 1 includes a computer that executes instructions of a program which is software that realizes each function. The computer includes, for example, one or more processors and a computer-readable recording medium that stores the program. Then, in the computer, the processor reads the program from the recording medium and executes the program, thereby achieving the invention. For example, a CPU (Central Processing Unit) can be used as the processor. In addition to a "non-temporary tangible medium" such as a ROM (Read Only Memory), a tape, a disk, a card, a semiconductor memory, a programmable logic circuit, etc. can be used as the recording medium. Further, a RAM (Random Access Memory) for developing the program may be further provided. Further, the program may be supplied to the computer via an arbitrary transmission medium (communication network, broadcast wave, etc.) capable of transmitting the program. In addition, one aspect of the invention can also be realized in the form of a data signal embedded in a carrier wave, in which the above program is embodied by electronic transmission.

### [Summary]

A production management device according to one aspect of the invention includes: a producible quantity computing unit that computes a producible quantity forecast in a unit period specified by at least one of a predetermined time zone and a predetermined day of a week based on production history information of a predetermined product; and a production-completed quantity computing unit that computes a production-completed quantity forecast from a first time point to a second time point in a future based on the producible quantity forecast.

According to the above configuration, when the producible quantity is computed, it is computed for the unit period specified by at least one of the predetermined time zone and the predetermined day of the week. Therefore, it can be computed in consideration of the irregularity in productivity depending on the time zone and the day of the week. Since the production-completed quantity forecast is computed based on the producible quantity forecast computed in this way, the productivity can be forecast more accurately.

In the production management device according to one aspect of the invention, the first time point is a past time point, and the production-completed quantity computing unit may compute the production-completed quantity forecast by a sum of an actual production quantity from the first time point to a present and the producible quantity forecast from the present to the second time point.

According to the above configuration, the actual production quantity is used for the past to the present, and the producible quantity forecast is used for the present to the future, and the production-completed quantity forecast is computed by adding them. As a result, it is possible to forecast the productivity more accurately.

In the production management device according to one aspect of the invention, a target achievement computing unit may be further provided to compute a target achievement period until a target production quantity is achieved based on a difference between the target production quantity from the first time point to the second time point and the production-completed quantity forecast. As a result, by comparing the computed target achievement period with the predetermined target production completion time, the progress status at the present time point can be grasped to deal with the production delay more accurately.

In the production management device according to one aspect of the invention, the production history information includes worker information that identifies a worker who performs production, the producible quantity computing unit may compute the producible quantity forecast corresponding to the worker predetermined, and the production-completed quantity computing unit may compute the production-completed quantity forecast corresponding to the worker predetermined. As a result, the production-completed quantity forecast is computed in consideration of the irregularity in productivity depending on the worker, so the productivity can be forecast more accurately.

In the production management device according to one aspect of the invention, the production history information includes product information that identifies a product, the producible quantity computing unit may compute the producible quantity forecast corresponding to the predetermined product, and the production-completed quantity computing unit may compute the production-completed quantity forecast corresponding to the predetermined product. As a result, the production-completed quantity forecast is computed in consideration of the irregularity in productivity depending on the difference between the products to be produced, so the productivity can be forecast more accurately.

The production management device according to one aspect of the invention may further include: an output unit that outputs forecast information based on a computation result of the production-completed quantity computing unit to outside by at least one of a plurality of output methods, and an output destination control unit that selects the output method based on the difference between the target production quantity from the first time point to the second time point and the production-completed quantity forecast. As a result, depending on the degree of delay or advance, the person considered most appropriate can be promptly notified of the situation of delay or advance.

A production management method according to one aspect of the disclosure includes: a producible quantity computing step of computing a producible quantity forecast in a unit period specified by at least one of a predetermined time zone and a predetermined day of a week based on production history information of a predetermined product; and a production-completed quantity computing step of computing a production-completed quantity forecast from a first time point to a second time point in a future based on the producible quantity forecast.

The invention is not limited to the above-described embodiments, and various modifications can be made within the scope of the claims. The technical scope of the invention also includes embodiments obtained by appropriately combining the technical means disclosed in the different embodiments.

### [Descriptions of Reference Numerals]

1 production management device
14 output unit
101 producible quantity computing unit
102 production-completed quantity computing unit
103 target achievement computing unit
104 output destination control unit

## Claims

1. A production management device, comprising:
a producible quantity computing unit that computes a producible quantity forecast in a unit period specified by at least one of a predetermined time zone and a predetermined day of a week based on production history information of a predetermined product; and
a production-completed quantity computing unit that computes a production-completed quantity forecast from a first time point to a second time point in a future based on the producible quantity forecast.

2. The production management device according to claim 1, wherein the first time point is a past time point, and
the production-completed quantity computing unit computes the production-completed quantity forecast by a sum of an actual production quantity from the first time point to a present and the producible quantity forecast from the present to the second time point.

3. The production management device according to claim 1 or 2, further comprising a target achievement computing unit that computes a target achievement period until a target production quantity is achieved based on a difference between the target production quantity from the first time point to the second time point and the production-completed quantity forecast.

4. The production management device according to any one of claims 1 to 3, wherein the production history information comprises worker information that identifies a worker who performs production,
the producible quantity computing unit computes the producible quantity forecast corresponding to the worker predetermined, and
the production-completed quantity computing unit computes the production-completed quantity forecast corresponding to the worker predetermined.

5. The production management device according to any one of claims 1 to 4, wherein the production history information comprises product information that identifies a product,
the producible quantity computing unit computes the producible quantity forecast corresponding to the predetermined product, and
the production-completed quantity computing unit computes the production-completed quantity forecast corresponding to the predetermined product.

6. The production management device according to any one of claims 1 to 5, further comprising:
an output unit that outputs forecast information based on a computation result of the production-completed quantity computing unit to outside by at least one of a plurality of output methods, and
an output destination control unit that selects the output method based on the difference between the target production quantity from the first time point to the second time point and the production-completed quantity forecast.

7. A production management method of a production management device, the production management method comprising:
a producible quantity computing step of computing a producible quantity forecast in a unit period specified by at least one of a predetermined time zone and a predetermined day of a week based on production history information of a predetermined product; and
a production-completed quantity computing step of computing a production-completed quantity forecast from a first time point to a second time point in a future based on the producible quantity forecast.

8. A production management program for a computer to function as the production management device according to any one of claims 1 to 6, wherein the production management program enables the computer to function as each of the above units.
